Europäisches Patentamt

European Patent Office

Office européen des brevets

(11) Publication number: **0 395 374**
**A1**

# EUROPEAN PATENT APPLICATION

(21) Application number: **90304430.3**

(22) Date of filing: **25.04.90**

(51) Int. Cl.⁵: **G01D 5/26, G01B 21/04**

(30) Priority: **28.04.89 GB 8909788**

(43) Date of publication of application:
**31.10.90 Bulletin 90/44**

(84) Designated Contracting States:
**CH DE FR GB IT LI SE**

(71) Applicant: **Renishaw plc**
**Gloucester Street**
**Wotton-Under-Edge Gloucestershire GL12**
**7DN(GB)**

(72) Inventor: **McMurtry, David Roberts**
**20 Tabernacle Road, Wotton-Under-Edge**
**Gloucestershire GL12 7EF(GB)**

(74) Representative: **Waite, John et al**
**Renishaw plc Patent Department Gloucester**
**Street**
**Wotton-under-Edge Gloucestershire GL12**
**7DN(GB)**

(54) **Optical metrological scale.**

(57) An optical metrological scale comprises a scale precursor (10) which has an active layer (16) of an optically writeable dye polymer. The scale precursor (10) is secured to a more stable substrate (20). A write head (26) having a controlled light source such as a laser is passed along the scale, to write a signal onto the active layer. The signal may be the periodic scale marks, or error correction information. The signal is written in dependence on the output of a laser interferometer (30-42), which monitors the position of the write head (26) along the scale.

*Fig. 1.*

EP 0 395 374 A1

## OPTICAL METROLOGICAL SCALE

This invention relates to optical scales for metrological use, and to methods of making such scales.

Optical scales are known for use in position encoders or angle encoders, for example for measuring the relative positions of the relatively movable members of a machine tool or coordinate measuring machine. In a position encoder for such purposes, an elongate scale with periodic optically readable marks may be provided on one member, and the marks are read by an opto-electronic read head provided on the other member. Alternatively, in an angle encoder, the scale is arcuate (for example around a disc), and again has periodic marks which are read by an opto-electronic read head. Such an angle encoder can be used to measure the rotation of a lead screw which drives the relatively movable member, and thus indirectly measure the relative position.

Examples of such optical metrological scales can be seen in International Patent Specifications Nos. WO86/03833, WO88/00332 and WO88/00331.

Conventionally, the marks are fixed on the scale as part of the manufacturing process. International Patent Specifications Nos. WO88/06717 and WO88/06713 describe writing marks onto scales subsequent to manufacture. Those two International Patent Specifications specifically describe magnetic scales upon which magnetic marks may be written, but also mention that an optical scale may have marks written to it optically.

The present invention is directed to a particular construction of optical scale to which marks may be written subsequently, and to methods of making such a scale.

In one aspect, the present invention provides a method of making an optical metrological scale, comprising:
taking a relatively unstable scale precursor made of an optically writeable material,
securing said scale precursor to a relatively stable substrate, and
optically writing scale marks onto the scale thus formed.

In a second aspect, the invention provides an optical metrological scale, comprising a relatively unstable scale precursor made of an optically writeable material, secured to a relatively stable substrate.

An embodiment of the invention will now be described with reference to the accompanying drawings, wherein:

Fig 1 is a transverse section through a scale precursor,

Fig 2 is a longitudional section illustrating the application of the precursor to a substrate, and

Fig 3 is a diagrammatic illustration of apparatus for writing scale marks to the scale.

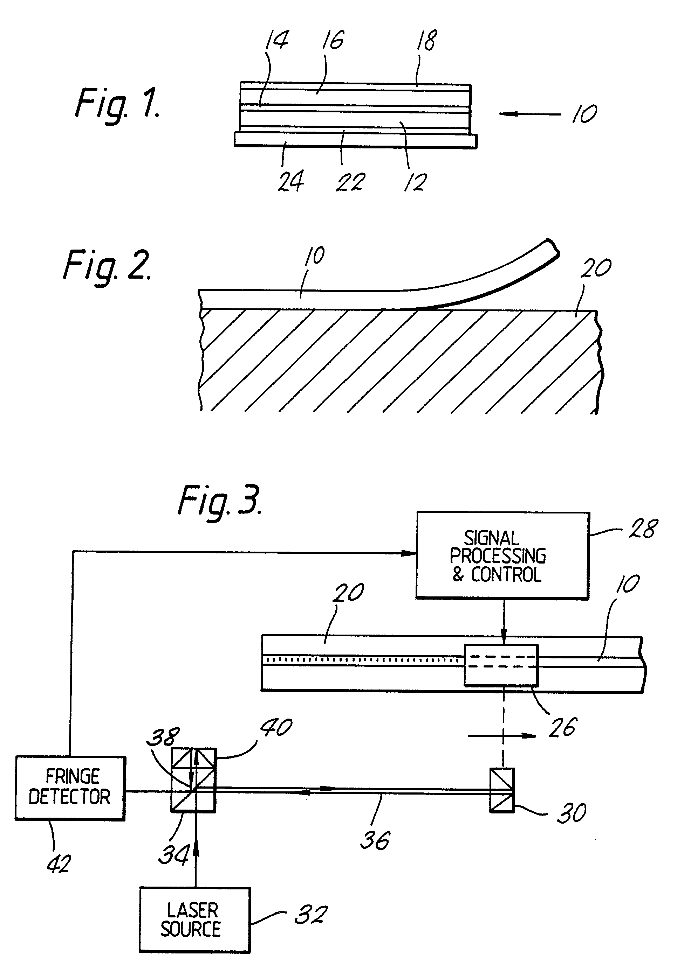

Referring firstly to Fig 1, a scale precursor 10 is in the form of a flexible elongate tape. It is manufactured from a commercially available optically writeable material sold by ICI Imagedata, of P.O. Box 6, Shire Park, Bessemer Road, Welwyn Garden City, Hertfordshire AL7 1HD, United Kingdom, under the tradename Digital Paper.

Digital Paper, in its conventional, commercially available form, comprises a base layer of polyester film 12 (specifically that sold by ICI under the trade name Melinex). On top of the base provided by the polyester film 12, three further layers are stacked. Firstly, there is a thin metallic reflective layer 14. Secondly there is an active layer 16 of a dye polymer. Finally, over the entire structure there is a protective overcoat layer 18. The dye polymer layer 16 is photo-sensitive to infra-red light, for example from a readily available solid state laser radiating at a wavelength of 780nm or 830nm, and the thickness of the layer 16 is an exact number of half-wavelengths of the infra-red light used. Digital data can. be written to the Digital Paper as a series of microscopic pits in the dye polymer layer. These are produced by focussing a laser beam of appropriate power (e.g. 10mW) so as to cause ablation of the dye polymer layer, as it absorbs the energy of the laser beam. Subsequently, the data can be read from the digital paper by reflecting a laser beam of the same wavelength but substantially lower power from the metallic reflective layer 14. The presence of an ablation pit causes a change in the path length compared with unpitted areas, which can be detected. Specifically, since the thickness of the active dye polymer layer 16 is an exact number of half-wavelengths of the infra-red light used, light reflected by the metallic layer 14 in unpitted areas interferes constructively with light reflected from the upper surface of the layer 16. In the area of a pit, however, the interference is destructive.

As shown in Fig 2, in order to make a scale from the scale precursor 10, the elongate tape is secured to a substrate 20 which is more stable than the tape. For example, compared to the tape, the substrate is rigid and inflexible, and not subject to stretching. In particular, it is desired that the substrate should have a known coefficient of thermal expansion. This is because it is important for a scale to have a well-defined behaviour when temperature changes. Where the scale is to be used in a coordinate measuring machine (CMM) having a granite bed, for example, the substrate 20 may be the granite itself. Alternatively, the substrate 20 may be a steel strip which can subsequently be installed on a CMM or machine tool. (The advantage of steel is that it will have the same coefficient of thermal expansion as steel workpieces which are to be measured). Another alternative is to make the substrate 20 of one of the known alloys having a very low coefficient of thermal expansion.

In order to secure the precursor 10 to the substrate 20, a suitable adhesive may be used. However, Fig 1 shows an optional but advantageous feature. To the underside of the polyester base 12, the precursor 10 is provided with a layer 22 of pressure-sensitive adhesive. For storage and transport, this is protected by a peelable backing layer 24. Securing the precursor to the substrate 20 is then simply a matter of peeling off the backing layer 24 and pressing the tape onto the substrate.

The precursor 10 is in a blank or virgin state when secured to the substrate 20, i.e. with no data or marks written to it. The scale marks are not written to it until after it has been so secured, since it is then stabilized by the substrate. If the scale marks were written to the precursor 10 before it is secured, for example, there would be a risk of stretching the flexible tape of the precursor as it was being secured. This would impair the accuracy of the scale marks.

Fig 3 illustrates a method of writing the periodic scale marks to the scale, after the tape precursor 10 has been secured to the substrate 20. A write head 26 is arranged to be traversable along the length of the scale, under the control of a signal processing and control circuit 28. The write head 26 contains a solid state infra-red laser and suitable optics for focussing the laser beam onto the digital paper of the scale, in order to form ablation pits in the conventional manner. These ablations pits then constitute the scale marks. The write head is controlled by a calibration means, for example as follows.

A retro-reflector 30 is secured to travel with the write head 26, and forms part of an interferometer system used to calibrate the scale. The interferometer system is generally conventional, comprising a laser source 32, and a beam splitter 34, which splits the beam from the source 32 into a measurement arm 36 and a reference arm 38. The reference arm 38 includes a retro-reflector 40 for reflecting the beam back to the beam splitter 34. The measurement arm 36 includes the movable retro-reflector 30, which also reflects the laser beam back to the beam splitter 34. The two reflected beams interfere, and as the write head 26 moves along the scale, fringes are produced in a well known manner and counted by a fringe detector 42. This gives an indication of the distance travelled along the scale by the write head 26. The signal processing and control circuity 28 switches the laser diode in the write head 26 on and off at appropriate intervals, so as to generate the marks in the scale precursor 10 (i.e. ablation pits) at a regular pitch (such as one micron) which is accurately controlled by the interferometer.

The arrangement of Fig 3 may be set up in a special jig for producing the scale marks. After marking, the scale comprising the precursor 10 and its substrate 20 can then be fitted, for example in a coordinate measuring machine or machine tool. Alternatively, for a more accurate result which cannot be affected by the mounting of the substrate 20 into the coordinate measuring machine or machine tool, the write head 26 may be temporarily fitted in place of the conventional read head on the machine tool, and the marks may be written in situ on the machine. Such a process is described in International Patent Specification No. WO88/06713.

The commercially-available Digital Paper product described above is a non-erasable, "write once, read many times" medium. Thus, it is ideally suited for making scales which are to be calibrated permanently, during the manufacturing process. However, the technology is known, for example for computer storage purposes, or for compact discs for audio or video purposes, to make similar media which are erasable. The present invention can advantageously make use of such erasable media in place of the Digital Paper product described above. The scale marks are then written in exactly the same way as described above, preferably in situ on the machine. However, the machine can be then recalibrated at regular intervals (say, annually) by erasing the existing scale marks and repeating the process as described with respect to Fig 3 and as shown in WO88/06713. Additionally, with an erasable scale, absolute position information or error correction information can be written to the scale as also described in that specification.

For further details of the Digital Paper product, reference should be made to an article by Dick Pountain, entitled "Digital Paper", in Byte magazine, February 1989, pages 274, 276, 278-280. This article also reviews other optically writeable media, including erasable media, which can be adapted for the purposes of the present invention if desired.

The above description has been of an elongate scale for a position encoder. However, an arcuate scale (in the form of a disc) for an angle encoder cna be made in a similar manner, by securing a disc of an optically writeable medium to a disc-shaped substrate, and then writing scale marks on it.

## Claims

1. A method of making an optical metrological scale, comprising:
taking a relatively unstable scale precursor made of an optically writeable material,
securing said scale precursor to a relatively stable substrate, and
optically writing scale marks onto the scale thus formed.

2. A method according to claim 1 wherein the scale precursor comprises a base layer, and a layer of said optically writeable material provided over the base layer.

3. A method according to claim 2 wherein a reflective layer is provided between the base layer and the layer of optically writeable material.

4. A method according to any one of the preceding claims wherein the optically writeable material is a dye polymer.

5. A method according to any one of the preceding claims, wherein the scale marks are written onto the scale by traversing an optical write head along the length of the scale, the distance of the write head along the scale being measured by calibration means, and the marks being written under control in accordance with the output of the calibration means.

6. A method according to claim 5 wherein the calibration means is an interferometer system.

7. An optical metrological scale, comprising a relatively unstable scale precursor made of an optically writeable material, secured to a relatively stable substrate.

8. A scale according to claim 7 wherein the scale precursor comprises a base layer, and a layer of said optically writeable material provided over the base layer.

9. A scale according to claim 8 wherein a reflective layer is provided between the base layer and the layer of optically writeable material.

10. A scale according to any one of claims 7 to 9, wherein the optically writeable material is a dye polymer.

11. A method of recording scale marks on a scale for position determination apparatus, comprising:
providing a relatively fixed structure and a relatively movable structure;
arranging a scale on one of the structures, said scale comprising a material onto which a signal can be written optically;
providing writing means on the other structure, the writing means comprising a light source for writing a signal optically onto said material;
providing calibration means for determining the relative positions of the structures;
moving the movable structure into a plurality of different positions relative to the fixed structure;

at each of said different positions, using the calibration means to determine the relative position, and using said writing means to write a signal optically onto the scale in dependence on the relative position thus determined; and
subsequently installing the scale on the position determination apparatus.

*Fig. 1.*

14  16  18

10

24  22  12

*Fig. 2.*

10

20

*Fig. 3.*

SIGNAL
PROCESSING
& CONTROL

28

20

10

26

30

FRINGE
DETECTOR

38  40

34

36

42

LASER
SOURCE

32

## DOCUMENTS CONSIDERED TO BE RELEVANT

EP 90304430.3

| Category | Citation of document with indication, where appropriate, of relevant passages | Relevant to claim | CLASSIFICATION OF THE APPLICATION (Int. Cl.⁵) |
|---|---|---|---|
| Y | <u>US - A - 4 757 196</u><br>(YAMADA et al.)<br>   * Column 3, lines 3-50;<br>     fig. 4A,4B,5A,5B,5C,7 *<br>-- | 1-4,<br>7-11 | G 01 D 5/26<br>G 01 B 21/04 |
| D,Y | BYTE, February, 1989<br>DICK POUNTAIN "Digital Paper"<br>pages 274-280<br>   * Pages 276,278; fig. 1,2 *<br>-- | 1-4,<br>7-11 | |
| A | <u>DE - A1 - 3 445 694</u><br>(MITUTOYO)<br>   * Page 5, line 19 - page 6,<br>     line 28; fig. 1 *<br>-- | 7 | |
| A | <u>US - A - 4 340 814</u><br>(DICIACCIO et al.)<br>   * Column 2, lines 22-46;<br>     fig. 1-5 *<br>-- | 7 | |
| D,A | <u>WO - A1 - 88/06 717</u><br>(RENISHAW PLS)<br>   * Page 1, lines 9-24; page 4,<br>     line 11 - page 5, line 4;<br>     fig. 1 *<br>-- | 1,11 | TECHNICAL FIELDS SEARCHED (Int. Cl.⁵)<br><br>G 01 B 21/00<br>G 01 D 5/00 |
| D,A | <u>WO - A1 - 88/06 713</u><br>(RENISHAW PLC)<br>   * Page 1, lines 6-22; page 9,<br>     line 20 - page 10, line 21;<br>     fig. 2 *<br>---- | 1-11 | |

The present search report has been drawn up for all claims

| Place of search | Date of completion of the search | Examiner |
|---|---|---|
| VIENNA | 16-07-1990 | BAUER |